# EUROPÄISCHE PATENTSCHRIFT

(11) **EP 0 458 170 B1**
(45) Veröffentlichungstag und Bekanntmachung des Hinweises auf die Patenterteilung: **10.11.1993**
(21) Anmeldenummer: 91107817.8
(22) Anmeldetag: 15.05.1991
(51) Int. Cl.: B23B 31/16

(54) **Spannfutter**
Chuck
Mandrin

(30) Priorität: 25.05.1990 DE 4016775
(43) Veröffentlichungstag der Anmeldung: 27.11.1991
(73) Patentinhaber: FORKARDT GmbH, 40699 Erkrath (DE)
(72) Erfinder: Kempken, Rainer, W-4006 Erkrath (DE)
(74) Vertreter: Stenger, Watzke & Ring Patentanwälte

(56) Entgegenhaltungen:
- EP-A- 0 005 457
- EP-A- 0 318 360
- DE-A- 3 437 505
- FR-A- 2 383 739

## Beschreibung

Die Erfindung betrifft ein Spannfutter mit mindestens einem in einem Futterkörper radial verschiebbar geführten, aus Treib- und Spannbacke bestehenden Backensatz, dessen Spannbacke an ihrer Rückseite formschlüssig mit einem Kupplungsstück verbindbar ist, das rechtwinklig zu der im Futterkörper für den Backensatz ausgebildeten Backenführung verschiebbar in der Treibbacke gelagert und durch einen drehbar in der Treibbacke gelagerten Exzenter vom Eingriff mit der Spannbacke entkuppelbar ist.

Ein derartiges Spannfutter ist in der Form eines Dreibackenfutters aus der DE-A- 34 37 505 bekannt. Bei dieser bekannten Futterkonstruktion greift der axial unverschiebbar, jedoch drehbar gelagerte Exzenter in eine auf der Oberseite des Kupplungsstückes ausgeführte Quernut ein, so daß sich bei einer Drehung des Exzenters eine Axialverschiebung des Kupplungsstückes ergibt. In der vorderen Endstellung greift hierbei das Kupplungsstück mit seiner Verzahnung in eine auf der Rückseite der Spannbacke ausgebildete Verzahnung ein, so daß die Spannbacke formschlüssig an der Treibbacke gehalten ist. Wird dagegen das Kupplungsstück über den Exzenter in seine hintere Endstellung überführt, sind Kupplungsstück und Spannbacke voneinander entkuppelt, so daß die Spannbacke von der Treibbacke getrennt ist und in radialer Richtung aus dem Futterkörper entnommen werden kann.

Um ein unbeabsichtigtes, das Kupplungsstück aus seiner Kupplungsstellung herausführendes Verdrehen des Exzenters zu verhindern, ist bei der bekannten Konstruktion im Kupplungsstück ein federbelasteter Kolben vorgesehen, der in der Kupplungsstellung des Kupplungsstückes in eine Quernut des Exzenters eingreift. Diese Verdrehsicherung des Exzenters ist jedoch davon abhängig, daß die verhältnismäßig kleine, den Kolben belastende Feder zuverlässig wirkt und die Kolbenbewegung nicht durch Schmutz oder Späne behindert wird.

Der Erfindung liegt die **Aufgabe** zugrunde, das aus der DE-A- 34 37 505 bekannte Spannfutter der eingangs beschriebenen Art derart weiterzubilden, daß eine zuverlässige, mit wenigen und robusten Bauteilen erzielbare formschlüssige Festlegung des Kupplungsstückes in seiner Kupplungsstellung geschaffen wird.

Die **Lösung** dieser Aufgabenstellung durch die Erfindung ist dadurch gekennzeichnet, daß der mit seinem exzentrischen Schaft in eine Quernut des Kupplungsstückes eingreifende Exzenter zwischen zwei Endstellungen axial verschiebbar gelagert und mit einem Anschlag versehen ist, der in der einen Endstellung des Exzenters in die Quernut des in der Kupplungsstellung befindlichen Kupplungsstückes eingreift und das Kupplungsstück in der Kupplungsstellung formschlüssig festhält.

Mit der Erfindung wird somit der Vorteil erreicht, daß der Exzenter nicht nur dem Antrieb des Kupplungsstückes zwischen Kupplungs- und Entkupplungsstellung dient, sondern auch der formschlüssigen Festlegung des Kupplungsstückes in der Kupplungsstellung. Hierbei liegt der Anschlag des parallel zu seiner Drehachse verschiebbaren Exzenters formschlüssig in der Quernut des Kupplungsstückes, so daß die auf das Kupplungsstück aus der Spannkraft über die Flächen des Formeingriffes (Verzahnung) ausgeübte Kraft über definierte Flächen und über die Lagerung des Exzenters auf die Treibbacke übertragen wird und hierbei gleichzeitig der Exzenter aufgrund des formschlüssigen Eingriffes seines Anschlages in die Quernut gegen Verdrehen gesichert ist. Die erfindungsgemäße Weiterbildung kann demzufolge auf einen zusätzlichen, federbelasteten und damit störanfälligen Riegelkolben verzichten.

Gemäß einem weiteren Merkmal der Erfindung wird der Exzenter durch zwei kreiszylindrische, in einer Längsbohrung der Treibbacke drehbar gelagerte Lagerscheiben und einen diese Lagerscheiben miteinander verbindenden Schaft gebildet, der exzentrisch zur Drehachse der Lagerscheiben angeordnet ist und in die Quernut des im Bereich zwischen den Lagerscheiben in einer Querbohrung der Treibbacke verschiebbar gelagerten Kupplungsstückes eingreift. Ein derart erfindungsgemäß ausgebildeter Exzenter läßt sich auf einfache und preiswerte Weise durch eine Drehbearbeitung herstellen und zuverlässig in der Längsbohrung der Treibbacke über entsprechend große Lagerflächen lagern.

Der in der Kupplungsstellung des Kupplungsstückes in dessen Quernut eingreifende Anschlag ist erfindungsgemäß am Ende des Schaftes bzw. auf der Innenfläche der einen Lagerscheibe ausgebildet, so daß er einstückig mit dem Exzenter hergestellt wird.

Bei einer bevorzugten Ausführungsform der Erfindung ist der Exzenter durch eine zwischen seiner den Anschlag tragenden Lagerscheibe und der Treibbacke angeordnete Feder belastet, die den Exzenter in seine eine Endstellung überführt, sobald das Kupplungsstück durch Drehen des Exzenters in die Kupplungsstellung gebracht worden ist. Die hierbei verwendete Feder kann ausreichend groß bemessen werden und ist im Inneren der Treibbacke geschützt vor Schmutz und Spänen angeordnet.

Wenn gemäß einem weiteren Merkmal der Erfindung der Anschlag an der radial innenliegenden Lagerscheibe des Exzenters angeordnet ist und die Feder den Exzenter in dessen axialer Richtung radial nach außen gerichtet belastet, wird die Federkraft durch die Fliehkraft des sich drehenden Spannfutters unterstützt, so daß auch insoweit die Sicherheit des erfindungsgemäßen Spannfutters erhöht wird.

Um die Betätigung des Exzenters auf möglichst einfache Weise zu ermöglichen, ist die radial außenliegende Lagerscheibe des Exzenters auf ihrer Außenfläche mit einer Schlüsselfläche für ein Betätigungswerkzeug versehen, das ausschließlich in der durch den Anschlag verriegelten Endstellung des Exzenters von diesem abziehbar ist. Bei einer bevorzugten Ausführung ist zu diesem Zweck die Schlüsselfläche als Schrägnut ausgebildet, aus der eine entsprechende Federleiste des Betätigungswerkzeuges nur dann abziehbar ist, wenn die Außenfläche der radial außenliegenden Lagerscheibe des Exzenters in einer Ebene mit der Außenfläche der Treibbacke liegt.

Um zu verhindern, daß bei einer Inbetriebnahme des Spannfutters bei in die Entkupplungsstellung zurückgezogenen Kupplungsstücken die Spannbacken unkontrolliert aus dem Futterkörper herausgeschleudert werden können, wirkt gemäß einem weiteren Merkmal der Erfindung das Kupplungsstück an seiner der Verzahnung abgewandten Rückseite über Steuerflächen derart mit einem Anschlagstück zusammen, daß ein Entkuppeln der Spannbacke von der Treibbacke nur in einer vorgegebenen Stellung der Treibbacke möglich ist und bei einer vom Futterkolben bewirkten Herausbewegung der Treibbacke aus dieser Stellung das Kupplungsstück über die Steuerflächen zwangsweise in die Kupplungsstellung überführt wird. Auf diese Weise ist ein Entkuppeln von Spannbacke und Treibbacke nur in einer bestimmten Stellung der Treibbacke und damit des Futterkolbens möglich. Wird der Futterkolben aus dieser Stellung unbeabsichtigt herausbewegt, werden die Kupplungsstücke zwangsläufig in die Kupplungsstellung zurückgeführt.

Bei einer bevorzugten Ausführungsform der Erfindung ist das Anschlagstück als ein in den Futterkörper eingesetzter, mit einer Anschrägung versehener Bolzen ausgebildet, dessen Anschrägung mit entsprechend ausgebildeten Schrägflächen einer in der Rückseite des Kupplungsstückes ausgebildeten Vertiefung zusammenwirkt. Diese erfindungsgemäße Ausbildung von Anschlagstück und Rückseite des Kupplungsstückes ermöglicht mit einfachen Mitteln eine zuverlässige Zwangssteuerung des Kupplungsstückes.

Mit der Erfindung wird schließlich vorgeschlagen, parallel zum Kupplungsstück ein an sich bekanntes federbelastetes Raststück in der Treibbacke anzuordnen; dieses Raststück erleichtert das Verstellen bzw. Einsetzen der Spannbacken in eine vorgegebene Position, bevor das Kupplungsstück betätigt wird.

Auf der Zeichnung ist ein Ausführungsbeispiel des erfindungsgemäßen Spannfutters anhand eines auf der Spindel einer Werkzeugmaschine zu montierenden Dreibackenfutters dargestellt, und zwar zeigen:
- Fig. 1: eine Frontansicht dieses Spannfutters,
- Fig. 2: einen Längsschnitt gemäß der Schnittlinie II-II in Fig. 1 durch das Spannfutter,

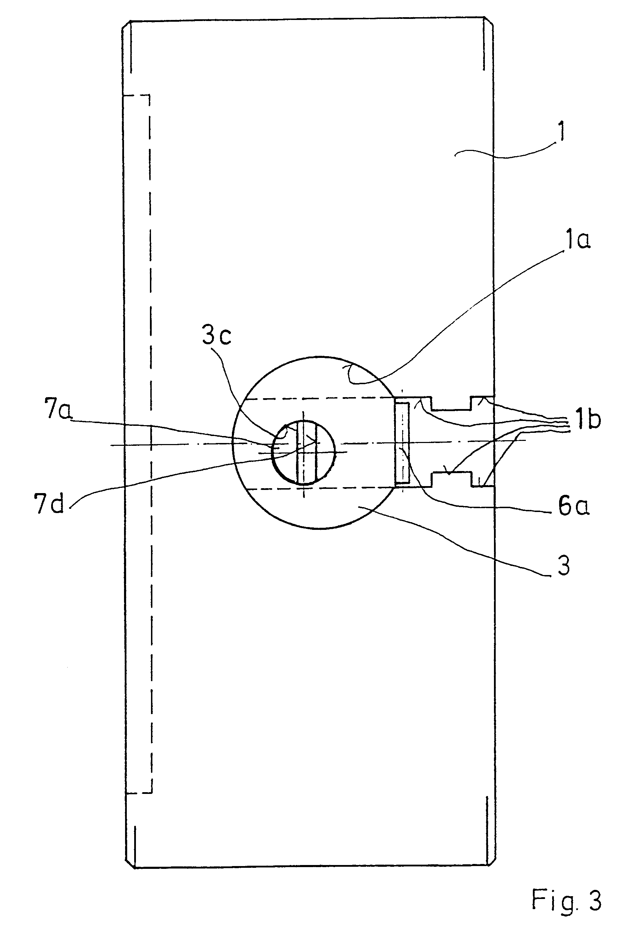

- Fig. 3: eine Draufsicht auf das Spannfutter gemäß den Figuren 1 und 2, jedoch ohne die in Fig. 2 und im oberen Teil der Fig. 1 eingezeichnete Spannbacke,
- Fig. 4: eine dem oberen Teil der Fig. 2 entsprechende Schnittdarstellung, jedoch mit in die Entkupplungsstellung überführtem Kupplungsstück,
- Fig. 5: einen Querschnitt gemäß der Schnittlinie V-V in Fig. 2 mit in der Kupplungsstellung befindlichem Kupplungsstück,
- Fig. 6: einen der Fig. 5 entsprechenden Querschnitt gemäß der Schnittlinie VI-VI in Fig. 4 mit in die Entkupplungsstellung zurückgezogenem Kupplungsstück,
- Fig. 7: eine perspektivische Darstellung von Treibbacke, Exzenter und Kupplungsstück,
- Fig. 8: eine Draufsicht auf das Kupplungsstück,
- Fig. 9: eine Seitenansicht des Exzenters,
- Fig. 10: eine um 90° gedrehte Seitenansicht des Exzenters nach Fig. 9 und
- Fig. 11: einen Schnitt durch den Exzenter nach der Schnittlinie XI-XI in Fig. 9.

Bei dem in der Zeichnung dargestellten Spannfutter handelt es sich um ein Dreibackenfutter mit einem Futterkörper 1, der durch drei Schrauben 2 am Spindelflansch einer nicht dargestellten Werkzeugmaschine befestigt wird. In radialen Führungen 1a und 1b des Futterkörpers 1 ist ein Backensatz verschiebbar gelagert, der aus einer Treibbacke 3 und einer Spannbacke 4 besteht. Die Treibbacke 3 hat hierbei einen kreisförmigen Querschnitt. Sie ist an ihrem radial innenliegenden Ende mit schräg zur Drehachse des Futterkörpers 1 verlaufenden Keilflächen 3a versehen, die mit den Keilflächen 5a eines Futterkolbens 5 zusammenwirken, der axial verschiebbar im Futterkörpers 1 angeordnet ist. Eine Axialbewegung des Futterkolbens 5 hat demzufolge eine radiale Bewegung der drei Treibbacken 3 zur Folge.

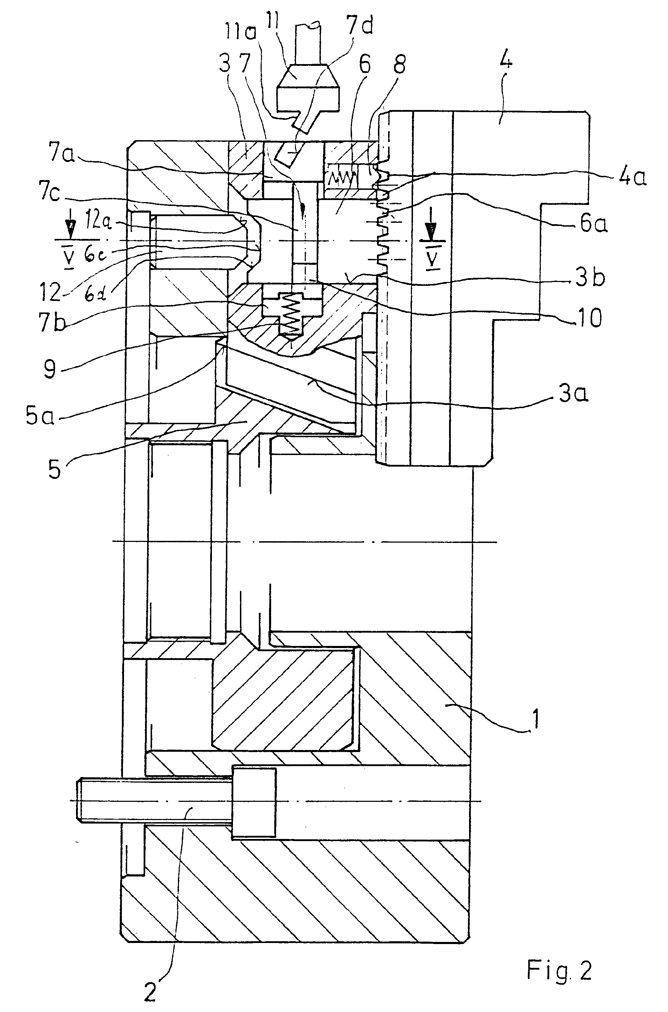

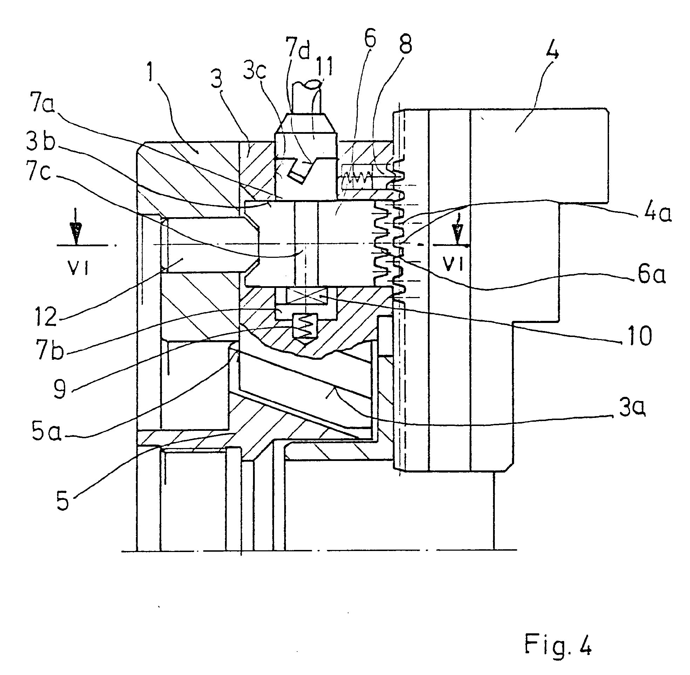

Die in getrennten radialen Führungen 1a und 1b des Futterkörpers 1 geführten Treib- und Spannbacken 3 bzw. 4 sind miteinander durch ein Kupplungsstück 6 kuppelbar, das in seiner Längsrichtung verschiebbar in einer Querbohrung 3b der Treibbacke 3 gelagert ist. Dieses Kupplungsstück 6 trägt auf seiner Vorderseite eine Verzahnung 6a, die in eine entsprechende Verzahnung 4a auf der Rückseite der Spannbacke 4 eingreift. In Figur 2 sind das Kupplungsstück 6 und die Spannbacke 4 in ihrer Kupplungsstellung dargestellt. Die Entkupplungsstellung zeigt Figur 4.

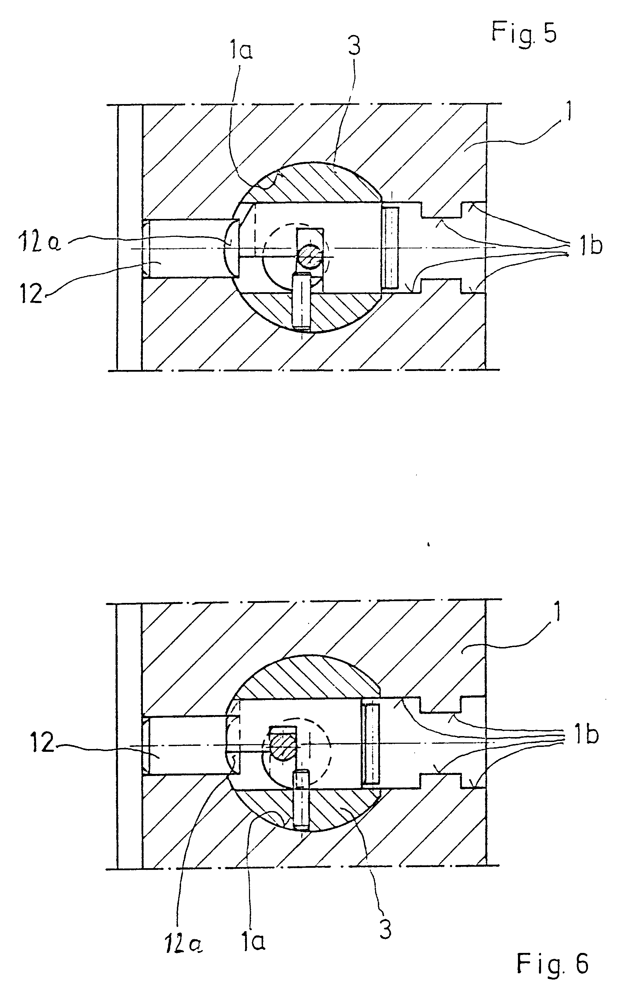

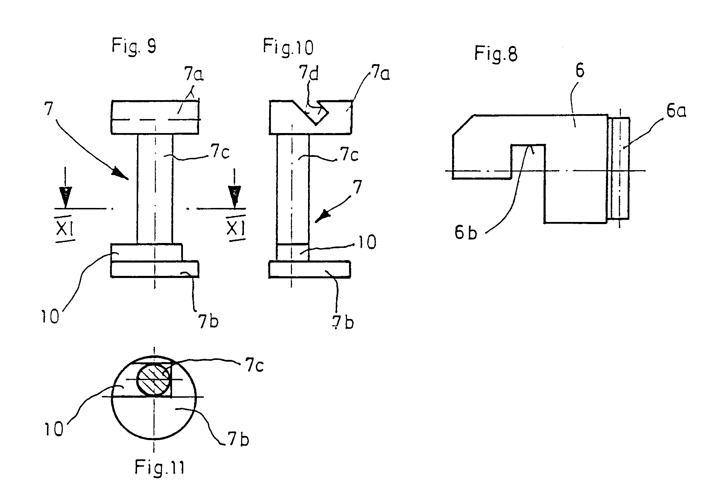

Um das Kupplungsstück 6 zwischen Kupplungs- und Entkupplungsstellung verschieben zu können, ist ein Exzenter 7 vorgesehen, der in einer Längsbohrung 3c der Treibbacke 3 angeordnet ist und dessen Aufbau im einzelnen den Figuren 9 bis 11 entnommen werden kann. Dieser Exzenter 7 besteht aus zwei kreiszylindrischen, in der Längsbohrung 3c der Treibbacke 3 drehbar gelagerten Lagerscheiben 7a und 7b sowie einem diese Lagerscheiben 7a und 7b miteinander verbindenden Schaft 7c, der exzentrisch zur Drehachse der Lagerscheiben 7a und 7b angeordnet ist. Dieser Schaft 7c greift im eine Quernut 6b des Kupplungsstückes 6 ein, wie am besten aus den Figuren 5 und 6 hervorgeht. Eine Drehbewegung des Exzenters 7 in der Längsbohrung 3c der Treibbacke 3 hat demzufolge eine Axialverschiebung des Kupplungsstückes 6 in der Querbohrung 3b der Treibbacke 3 zur Folge. Während das Kupplungsstück 6 in seiner vorderen, die Kupplungsstellung bildenden Endstellung mit seiner Verzahnung 6a in die Verzahnung 4a der Spannbacke 4 eingreift, ist die Verzahnung 6a des Kupplungsstückes 6 in der anderen, die Entkupplungsstellung bildenden Endstellung vollständig aus der Verzahnung 4a der Spannbacke 4 zurückgezogen, so daß in dieser Stellung die Spannbacke 4 in radialer Richtung aus dem Futterkörper 1 entnommen werden kann, wie aus Figur 4 ersichtlich ist.

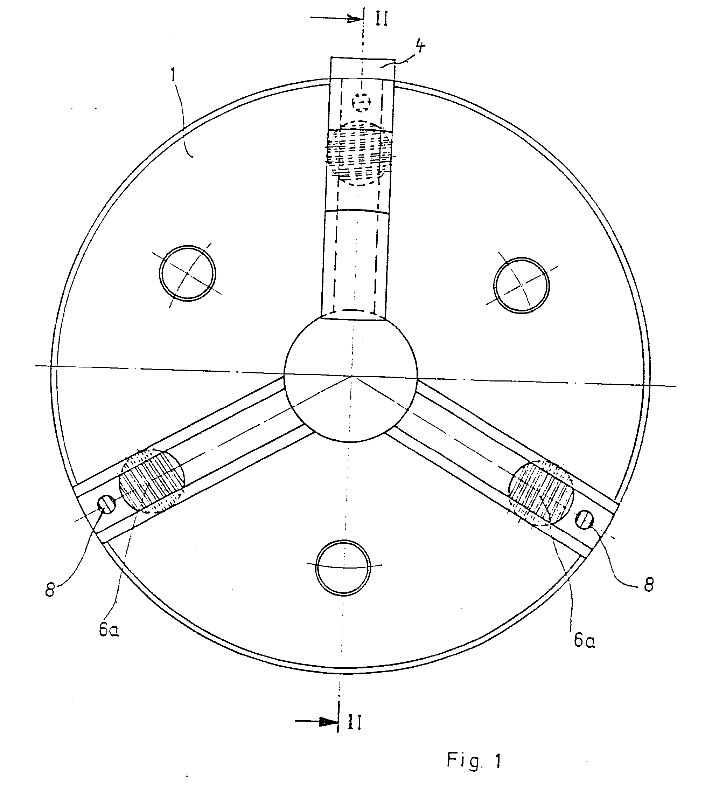

Bei der Verschiebung der Spannbacke 4 in ihrer Führung 1b des Futterkörpers 1 ist beim Ausführungsbeispiel ein gewisser Widerstand zu überwinden, der durch ein federbelastetes Raststück 8 erzeugt wird, das sowohl in der unteren Hälfte der Figur 1 als auch in den Figuren 2 und 4 eingezeichnet ist. Dieses Raststück 8 umfaßt einen in die Verzahnung 4a der Spannbacke 4 eingreifenden Zahn, der jedoch bei einer Radialverschiebung der Spannbacke 4 durch Überwinden der Federkraft zurückgedrückt werden kann.

Um ein Verdrehen des Exzenters 7 zu ermöglichen, ist dessen obere Lagerscheibe 7a auf ihrer Außenseite mit einer Schlüsselfläche 7d versehen. Zwischen der unteren Lagerscheibe 7b des Exzenters 7 und der Treibbacke 3 ist eine Feder 9 angeordnet, die den Exzenter 7 in radial nach außen gerichteter Richtung belastet. Diese Feder 9 ist am besten in den Figuren 2 und 4 zu erkennen.

Am unteren Ende des Schaftes 7c bzw. auf der Innenfläche der unteren Lagerscheibe 7b des Exzenters 7 ist ein Anschlag 10 ausgebildet, der gemäß den Figuren 2 und 5 in die Quernut 6b des Kupplungsstückes 6 eingreift, wenn sich das Kupplungsstück 6 in seiner Kupplungsstellung befindet. In dieser Stellung wird der Exzenter 7 aufgrund der Kraft der Feder 9 derart radial nach außen verschoben, daß der Anschlag 10 innerhalb der Quernut 6b des Kupplungsstückes 6 zu liegen kommt. Auf diese Weise wird ein ungewolltes Verdrehen des Exzenters 7 und damit Zurückziehen des Kupplungsstückes 6 aus der Kupplungsstellung verhindert; eine Überführung des Kupplungsstückes 6 aus seiner Kupplungsstellung ist nur bewußt dadurch möglich, daß der Exzenter 7 entgegen der Kraft der Feder 9 durch ein Betätigungswerkzeug 11 in das Innere der Treibbacke 3 gedrückt wird. Erst wenn der Anschlag 10 aus der Quernut 6b des Kupplungsstückes 6 herausgetreten ist, kann der Exzenter 7 mittels des in seine Schlüsselfläche 7d eingreifenden Betätigungswerkzeuges 11 verdreht werden. Da die Feder 9 zwischen der Treibbacke 3 und der unteren Lagerscheibe 7b des Exzenters 7 angeordnet ist, wird ihre Wirkung durch die Fliehkraft des Spannfutters unterstützt, wenn dieses in Umdrehungen versetzt wird. Hierdurch erhöht sich die Sicherheit der voranstehend beschriebenen formschlüssigen Verriegelung sowohl des Exzenters 7 als auch des Kupplungsstückes 6 in der Kupplungsstellung.

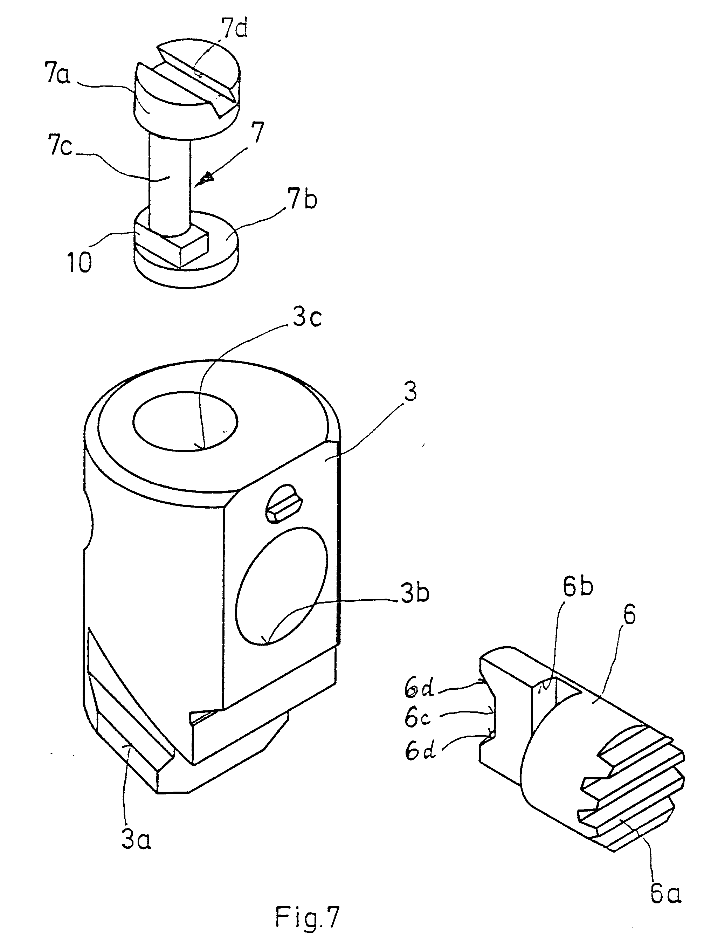

Wie aus den Figuren 2, 4 und 7 hervorgeht, ist die Schlüsselfläche 7d als Schrägnut ausgebildet, in die eine entsprechende Federleiste 11a des Betätigungswerkzeuges 11 eingreift. Durch diese Schrägstellung von Nut und Feder kann das Betätigungswerkzeug 11 nur dann an den Exzenter 7 angesetzt und von diesem abgezogen werden, wenn sich die Außenfläche der radial außenliegenden Lagerscheibe 7a des Exzenters 7 in einer Ebene mit der Außenfläche der Treibbacke 3 befindet. In dieser Endstellung greift der Anschlag 10 in die Quernut 6b des in der Kupplungsstellung befindlichen Kupplungsstückes 6 ein. Es wird somit sichergestellt, daß das Betätigungswerkzeug 11 nur dann abgezogen werden kann, wenn eine ordnungsgemäße Verriegelung der Spannbacke 4 durch das Kupplungsstück 6 vorliegt.

Insbesondere in den Figuren 2 und 4 ist zu erkennen, daß ein Zurückziehen des Kupplungsstückes 6 aus seiner Kupplungsstellung (Fig.2) in die Entkupplungsstellung (Fig.4) nur dann möglich ist, wenn sich die Treibbacke 3 und damit der Futterkolben 5 in einer bestimmten Stellung befinden. Dies wird durch ein Anschlagstück 12 bewirkt, das als ein in den Futterkörper 1 eingesetzter, mit einer Anschrägung 12a versehener Bolzen ausgebildet ist. Die Anschrägung 12a des Anschlagstückes 12 wirkt mit entsprechend ausgebildeten Schrägflächen 6d zusammen, die in einer Vertiefung 6c in der Rückseite des Kupplungsstückes 6 ausgebildet sind.

Sofern die Treibbacke 3 in der vorgegebenen Entkupplungsstellung steht, läßt die Vertiefung 6c in der Rückseite des Kupplungsstückes 6 ein durch den Exzenter 7 bewirktes Zurückziehen des Kupplungsstückes 6 zu. Die als Steuerflächen wirkenden Schrägflächen 6d und Anschrägungen 12a am Kupplungsstück 6 bzw. Anschlagstück 12 bewirken eine zwangsweise Überführung des Kupplungsstückes 6 in die in Fig.2 dargestellte Kupplungsstellung, wenn in der Entkupplungsstellung nach Fig.4 der Futterkolben 5 betätigt werden sollte. In diesem Fall drücken die Steuerflächen 6d und 12a das Kupplungsstück 6 in die Kupplungsstellung, sobald eine Relativbewegung zwischen Treibbacke 3 und dem im Futterkörper 1 angeordneten Anschlagstück 12 erfolgt. Auf diese Weise wird verhindert, daß die Spannbacken 4 unkontrolliert aus dem Futterkörper 1 herausgeschleudert werden können, wenn das Spannfutter in Umdrehungen versetzt wird, ohne daß zuvor durch Betätigen der Exzenter 7 die vorschriftsmäßige Kupplung zwischen Spannbacken 4 und Treibbacken 3 hergestellt worden ist.

## Patentansprüche

1. Spannfutter mit mindestens einen in einem Futterkörper (1) radial verschiebbar geführten, aus Treib- und Spannbacke bestehenden Backensatz, dessen Spannbacke (4) an ihrer Rückseite formschlüssig mit einem Kupplungsstück (6) verbindbar ist, das rechtwinklig zu der im Futterkörper (1) für den Backensatz ausgebildeten Backenführung verschiebbar in der Treibbacke (3) gelagert und durch einen drehbar in der Treibbacke (3) gelagerten Exzenter (7) vom Eingriff mit der Spannbacke (4) entkuppelbar ist,
**dadurch gekennzeichnet,**
daß der mit seinen exzentrischen Schaft (7c) in eine Quernut (6b) des Kupplungsstückes (6) eingreifende Exzenter (7) zwischen zwei Endstellungen axial verschiebbar gelagert und mit einem Anschlag (10) versehen ist, der in der einen Endstellung des Exzenters (7) in die Quernut (6b) des in der Kupplungsstellung befindlichen Kupplungsstückes (6) eingreift und das Kupplungsstück (6) in der Kupplungsstellung formschlüssig festhält.

2. Spannfutter nach Anspruch 1, dadurch gekennzeichnet, daß der Exzenter (7) durch zwei kreiszylindrische, in einer Längsbohrung (3c) der Treibbacke (3) drehbar gelagerte Lagerscheiben (7a,7b) und einen diese Lagerscheiben (7a,7b) miteinander verbindenden Schaft (7c) gebildet ist, der exzentrisch zur Drehachse der Lagerscheiben (7a,7b) angeordnet ist und in die Quernut (6b) des im Bereich zwischen den Lagerscheiben (7a,7b) in einer Querbohrung (3b) der Treibbacke (3) verschiebbar gelagerten Kupplungsstückes (6) eingreift.

3. Spannfutter nach den Ansprüchen 1 und 2, dadurch gekennzeichnet, daß der in der Kupplungsstellung des Kupplungsstückes (6) in dessen Quernut (6b) eingreifende Anschlag (10) am Ende des Schaftes (7c) bzw. auf der Innenfläche der einen Lagerscheibe (7b) des Exzenters (7) ausgebildet ist.

4. Spannfutter nach den Ansprüchen 1 bis 3, dadurch gekennzeichnet, daß der Exzenter (7) durch eine zwischen seiner den Anschlag (10) tragenden Lagerscheibe (7b) und der Treibbacke (3) angeordnete Feder (9) belastet ist, die den Exzenter (7) in seine eine Endstellung überführt, sobald das Kupplungsstück (6) durch Drehen des Exzenters (7) in die Kupplungsstellung gebracht worden ist.

5. Spannfutter nach Anspruch 4, dadurch gekennzeichnet, daß der Anschlag (10) an der radial innenliegenden Lagerscheibe (7b) des Exzenters (7) angeordnet ist und die Feder (9) den Exzenter (7) in dessen axialer Richtung radial nach außen gerichtet belastet.

6. Spannfutter nach den Ansprüchen 1 bis 5, dadurch gekennzeichnet, daß die radial außenliegende Lagerscheibe (7a) des Exzenters (7) auf ihrer Außenfläche mit einer Schlüsselfläche (7d) für ein Betätigungswerkzeug (11) versehen ist, das ausschließlich in der durch den Anschlag (10) verriegelten Endstellung des Exzenters (7) von diesem abziehbar ist.

7. Spannfutter nach mindestens einem der Ansprüche 1 bis 6, dadurch gekennzeichnet, daß die Schlüsselfläche (7d) als Schrägnut ausgebildet ist, aus der eine entsprechende Federleiste (11a) des Betätigungswerkzeuges (11) nur dann abziehbar ist, wenn die Außenfläche der radial außenliegenden Lagerscheibe (7a) des Exzenters (7) in einer Ebene mit der Außenfläche der Treibbacke (3) liegt.

8. Spannfutter nach mindestens einem der Ansprüche 1 bis 7, dadurch gekennzeichnet, daß das Kupplungsstück (6) an seiner der Verzahnung (6a) abgewandten Rückseite über Steuerflächen (6d,12a) derart mit einem Anschlagstück (12) zusammenwirkt, daß ein Entkuppeln der Spannbacke (4) von der Treibbacke (3) nur in einer vorgegebenen Stellung der Treibbacke (3) möglich ist und bei einer vom Futterkolben (5) bewirkten Herausbewegung der Treibbacke (3) aus dieser Stellung das Kupplungsstück (6) über die Steuerflächen (6d,12a) zwangsweise in die Kupplungsstellung überführt wird.

9. Spannfutter nach Anspruch 8, dadurch gekennzeichnet, daß das Anschlagstück (12) als ein in den Futterkörper (1) eingesetzter, mit einer Anschrägung (12a) versehener Bolzen ausgebildet ist, dessen Anschrägung (12a) mit entsprechend ausgebildeten Schrägflächen (6d) einer in der Rückseite des Kupplungsstückes (6) ausgebildeten Vertiefung (6c) zusammenwirkt.

10. Spannfutter nach mindestens einem der Ansprüche 1 bis 9, dadurch gekennzeichnet, daß parallel zum Kupplungsstück (6) ein an sich bekanntes, federbelastetes Raststück (8) in der Treibbacke (3) angeordnet ist.

## Claims

1. Clamping chuck having at least one jaw set which is guided so as to be radially displaceable in a chuck body (1) and consists of a driving and a clamping jaw and the clamping jaw (4) of which can be positively connected on its rear side to a coupling piece (6) which is mounted in the driving jaw (3) so as to be displaceable at right angles to the jaw guide formed in the chuck body (1) for the jaw set and which can be uncoupled from engagement with the clamping jaw (4) by means of an eccentric (7) mounted rotatably in the driving jaw (3), characterized in that the eccentric (7) engaging with its eccentric shank (7c) into a transverse groove (6b) of the coupling piece (6) is mounted so as to be axially displaceable between two end positions and is provided with a stop (10) which, in one end position of the eccentric (7), engages into the transverse groove (6b) of the coupling piece (6) located in the coupling position and retains the coupling piece (6) positively in the coupling position.

2. Clamping chuck according to Claim 1, characterized in that the eccentric (7) is formed by two circular-cylindrical bearing discs (7a, 7b), mounted rotatably in a longitudinal bore (3c) of the driving jaw (3), and by a shank (7c) which connects these bearing discs (7a, 7b) to one another and is arranged eccentrically relative to the axis of rotation of the bearing discs (7a, 7b) and which engages into the transverse groove (6b) of the coupling piece (6) mounted displaceably in a transverse bore (3b) of the driving jaw (3) in the region between the bearing discs (7a, 7b).

3. Clamping chuck according to Claims 1 and 2, characterized in that the stop (10), which, in the coupling position of the coupling piece (6), engages into the transverse groove (6b) of the latter, is formed at the end of the shank (7c) or on the inner face of one bearing disc (7b) of the eccentric (7).

4. Clamping chuck according to Claims 1 to 3, characterized in that the eccentric (7) is loaded by a spring (9) which is arranged between its bearing disc (7b) carrying the stop (10) and the driving jaw (3) and which transfers the eccentric (7) into one of its end positions as soon as the coupling piece (6) has been brought into the coupling position as a result of the rotation of the eccentric (7).

5. Clamping chuck according to Claim 4, characterized in that the stop (10) is arranged on the radially inner bearing disc (7b) of the eccentric (7), and the spring (9) loads the eccentric (7) radially outwards in the axial direction of the latter.

6. Clamping chuck according to Claims 1 to 5, characterized in that the radially outer bearing disc (7a) of the eccentric (7) is provided, on its outer face, with a key face (7d) for an actuating tool (11) which can be pulled off from the eccentric (7) solely in the end position of the eccentric (7) locked by the stop (10).

7. Clamping chuck according to at least one of Claims 1 to 6, characterized in that the key face (7d) is designed as an oblique groove, out of which a corresponding spring strip (11a) of the actuating tool (11) can be pulled off only when the outer face of the radially outer bearing disc (7a) of the eccentric (7) lies in one plane with the outer face of the driving jaw (3).

8. Clamping chuck according to at least one of Claims 1 to 7, characterized in that the coupling piece (6), on its rear side facing away from the toothing (6a), cooperates with a stop piece (12) via control faces (6d, 12a), in such a way that an uncoupling of the clamping jaw (4) from the driving jaw (3) is possible only in a predetermined position of the driving jaw (3), and, when the driving jaw (3) moves out of this position by means of the chuck piston (5), the coupling piece (6) is transferred into the coupling position positively via the control faces (6d, 12a).

9. Clamping chuck according to Claim 8, characterized in that the stop piece (12) is designed as a bolt which is inserted into the chuck body (1) and is provided with a bevel (12a) and the bevel (12a) of which cooperates with correspondingly designed oblique faces (6d) of a depression (6c) formed in the rear side of the coupling piece (6).

10. Clamping chuck according to at least one of Claims 1 to 9, characterized in that a spring-loaded catch piece (8) known per se is arranged in the driving jaw (3) in parallel with the coupling piece (6).

## Revendications

1. Mandrin de serrage comprenant au moins un jeu de mâchoires qui est guidé de manière radialement coulissante dans un corps de mandrin (1) et est composé d'une mâchoire d'entraînement et d'une mâchoire de serrage, et dont la mâchoire de serrage (4) est reliée mécaniquement, par son côté arrière, à une pièce d'accouplement (6) qui coulisse, dans la mâchoire d'entraînement (3), perpendiculairement au guide-mâchoires prévu dans le corps de mandrin (1) pour le jeu de mâchoires, et qui peut être désolidarisée de la mâchoire de serrage (4) par un excentrique (7) monté en rotation dans la mâchoire d'entraînement (3), caractérisé en ce que l'excentrique (7), dont la tige excentrique (7c) s'engage dans une gorge transversale (6c) de la pièce d'accouplement (6), peut se déplacer axialement entre deux positions extrêmes et est muni d'une butée (10) qui, dans l'une des positions extrêmes de l'excentrique (7), s'engage dans la gorge transversale (6b) de la pièce d'accouplement (6) se trouvant en position d'accouplement et immobilise mécaniquement la pièce d'accouplement (6) en position d'accouplement.

2. Mandrin de serrage selon la revendication 1, caractérisé en ce que l'excentrique (7) est formé par deux disques d'appui cylindriques circulaires (7a, 7b), montés en rotation dans un perçage longitudinal (3c) de la mâchoire d'entraînement (3), et par une tige (7c) qui relie ces disques d'appui (7a, 7b) entre eux, qui est montée de manière excentrée par rapport à l'axe de rotation des disques d'appui (7a, 7b) et qui s'engage dans la gorge transversale (6b) de la pièce d'accouplement (6) montée de manière coulissante dans la zone comprise entre les disques d'appui (7a, 7b), à l'intérieur d'un perçage transversal (3b) de la mâchoire d'entraînement (3).

3. Mandrin de serrage selon les revendications 1 et 2, caractérisé en ce que la butée (10) qui s'engage dans la gorge transversale (6b) de la pièce d'accouplement (6), lorsque celle-ci est en position d'accouplement, se trouve à l'extrémité de la tige (7c) ou sur la surface intérieure de l'un des disques d'appui, (7b), de l'excentrique (7).

4. Mandrin de serrage selon les revendications 1 à 3, caractérisé en ce que l'excentrique (7) est sollicité par un ressort (9) qui est disposé entre son disque d'appui (7b), qui porte la butée (10), et la mâchoire d'entraînement (3), et qui transfère l'excentrique (7) dans l'une de ses positions extrêmes dès que la pièce d'accouplement (6) a été amenée en position d'accouplement par rotation de l'excentrique (7).

5. Mandrin de serrage selon la revendication 4, caractérisé en ce que la butée (10) se trouve contre le disque d'appui intérieur radial (7b) de l'excentrique (7) et le ressort (9) sollicite l'excentrique (7) radialement vers l'extérieur dans son sens axial.

6. Mandrin de serrage selon les revendications 1 à 5, caractérisé en ce que le disque d'appui extérieur radial (7a) de l'excentrique (7) comporte, sur sa surface extérieure, une surface réceptrice de clé (7d) destinée à un outil d'actionnement (11) qui ne peut être retiré de l'excentrique (7) que lorsque celui-ci se trouve dans la position extrême verrouillée par la butée (10).

7. Mandrin de serrage selon au moins l'une des revendications 1 à 6, caractérisé en ce que la surface réceptrice de clé (7d) est conçue sous la forme d'une gorge oblique, de laquelle la languette correspondante (11a) de l'outil d'actionnement (11) ne peut être extraite que lorsque la surface extérieure du disque d'appui extérieur radial (7a) de l'excentrique (7) se trouve dans le même plan que la surface extérieure de la mâchoire d'entraînement (3).

8. Mandrin de serrage selon au moins l'une des revendications 1 à 7, caractérisé en ce que la pièce d'accouplement (6) coopère, par l'intermédiaire de surfaces de commande (6d, 12a), avec une pièce de butée (12) au niveau de son côté arrière opposé à la denture (6a), de sorte que la machoire de serrage (4) ne peut être désaccouplée de la machoire d'entraînement (3) que lorsque cette dernière se trouve dans une position prédéfinie, et, lorsque la mâchoire d'entraînement (3) quitte cette position sous l'action du piston de mandrin (5), la pièce d'accouplement (6) est transférée de manière forcée en position d'accouplement par les surfaces de commande (6d, 12a).

9. Mandrin de serrage selon la revendication 8, caractérisé en ce que la pièce de butée (12) est conçue sous la forme d'un goujon qui est logé dans le corps de mandrin (1) et comporte un chanfrein (12a) et dont le chanfrein (12a) coopère avec des surfaces inclinées (6d) de conception correspondante d'un creux (6c) ménagé dans le côté arrière de la pièce d'accouplement (6).

10. Mandrin de serrage selon au moins une des revendications 1 à 9, caractérisé en ce que, parallèlement à la pièce d'accouplement (6), une pièce de crantage à sollicitation élastique (8) connue en soi est prévue dans la mâchoire d'entraînement (3).
